# EUROPÄISCHE PATENTSCHRIFT

(11) **EP 3 595 826 B1**
(45) Veröffentlichungstag und Bekanntmachung des Hinweises auf die Patenterteilung: **26.10.2022**
(21) Anmeldenummer: 18728004.5
(22) Anmeldetag: 14.03.2018
(51) Int. Cl.: B21D 5/02, A47C 9/02, B30B 15/00, A47C 9/06

(54) **BIEGEPRESSENANORDNUNG MIT EINEM POSITIONIERBAREN SITZ FÜR EINE BEDIENPERSON**
BRAKE PRESS ARRANGEMENT WITH A POSITIONABLE USER SEAT
DISPOSITIF DE PRESSE À PLIER AVEC UN SIÈGE POSITIONNABLE

(30) Priorität: 16.03.2017 AT 502102017
(43) Veröffentlichungstag der Anmeldung: 22.01.2020
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); SCHERNHAMMER, Michael, 4060 Leonding (AT); STEININGER, Verena, 4020 Linz (AT); THEIS, Helmut, 4540 Pfarrkirchen (AT); WALDHERR, Manfred, 4040 Linz (AT)
(74) Vertreter: Burger, Hannes
(86) Internationale Anmeldenummer: PCT/AT2018/060065
(87) Internationale Veröffentlichungsnummer: WO 2018/165690

(56) Entgegenhaltungen:
- WO-A1-00/22965
- JP-A- 2004 024 828
- JP-A- 2014 083 555
- US-A- 5 540 160

## Beschreibung

Die Erfindung betrifft eine Biegepressenanordnung gemäß dem Oberbegriff des Anspruch 1.

Das Arbeiten an einer Biegepresse, z.B. Abkantpresse, erfolgt bislang meist im Stehen, weil Rohteile und fertiggebogene Teile auf Paletten/Kisten vor der Maschine abgelegt werden und diese Kisten nicht von einer stationären Sitzgelegenheit aus erreicht werden können. Außerdem muss sich der Bediener beim Vorhandensein mehrerer Biegestationen entlang des Pressentisches bewegen. Im Zusammenhang mit der Bestückung und Positionierung von Werkstücken stellt das Stehen eine große körperliche Belastung dar.

Die JP 2014 083555 A, die die Basis für den Oberbegriff des Anspruchs 1 bildet, offenbart eine Biegepresse und einen davor angeordneten Sitz für eine Bedienperson. Der Sitz ist auf Schienen einer Unterkonstruktion parallel zur Biegelinie der Biegepresse verfahrbar. Die Unterkonstruktion nimmt den gesamten Raum vor der Biegepresse in Anspruch. Das Aufsitzen bzw. das Verlassen des Sitzes ist mühevoll, da die breite Unterkonstruktion einschließlich der Schienen überschritten werden muss. Dies bringt erhebliche Gefahren für die Bedienperson mit sich. Dabei kann die Bedienperson nicht nur über die Schienen stolpern, sondern auch in den Gefahrenbereich der Biegepresse fallen. Schließlich ist auch die Flexibilität einer solchen Sitzgelegenheit gering.

Die JP 2004 024828 A offenbart - ohne Bezug zu einer Maschine - verschiedene Sitze als Hilfsmittel für einen Arbeiter, der eine stehende oder halb-hockende Stellung einnimmt. Dabei ist ein Mittel zum nach oben Drücken vorgesehen, welches mit einer im wesentlichen konstanten Kraft - unabhängig von der Position der Taille - den Körper des Arbeiters nach oben drückt.

Die US 5540160 betrifft Nähmaschinen, welche auf einem Tisch angeordnet sind. Im unteren Bereich des Tischgestells ist ein Sitz angebunden. Unterhalb des Sitzes ist eine Stütze ("rest") vorgesehen, durch welche die durch das Gewicht der Person verursachte Kraft in den darunterliegenden Boden einleitet.

Die WO 0022965 A1 offenbart Arbeitsbereiche im Zusammenhang mit Einrichtungen im Dienstleistungsbereich für die Beratung von Kunden. Die dabei vorgesehenen Sitze sind im Boden verankert.

Aufgabe der vorliegenden Erfindung war es, die Nachteile des Standes der Technik zu überwinden und eine Biegenpressenanordnung zur Verfügung zu stellen, bei der der Sitz für eine Bedienperson und die dafür nötige Konstruktion einen geringen Platzbedarf, eine hohe Flexibilität hinsichtlich Verstellbarkeit und Bedienung sowie ein hohes Maß an Sicherheit aufweisen. Bevorzugt soll sich die Biegenpressenanordnung durch eine hohe Benutzerfreundlichkeit auszeichnen.

Diese Aufgabe wird durch eine Biegepressenanordnung der eingangs genannten Art dadurch erreicht, dass die Trägereinrichtung zwischen der Befestigungsstelle und dem Sitz durch ein erstes Trägerelement, das relativ zum Gestell einen ersten Bewegungsfreiheitsgrad aufweist, und ein zweites Trägerelement, das von dem ersten Trägerelement getragen wird und relativ zu dem ersten Trägerelement einen zweiten Bewegungsfreiheitsgrad aufweist, gebildet ist und dass die Befestigungsstelle der Trägereinrichtung an dem Gestell der Biegepresse angeordnet ist und die Trägereinrichtung und der Sitz vom Gestell der Biegepresse getragen werden, wobei die Befestigungsstelle der Trägereinrichtung an dem Gestell in einem Bereich oberhalb der Werkzeughalterungen liegt und/oder der Sitz und die Trägereinrichtung über dem Niveau der Aufstandsfläche der Biegepresse schwebend gehalten sind und zur Gänze vom Gestell der Biegepresse getragen werden.

Durch die Bewegungsfreiheitsgrade wird ein hohes Maß an Flexibilität erreicht. Der Sitz kann dadurch in verschiedenen Positionen vor oder neben der Biegepresse positioniert werden und bildet somit eine mobile Sitzgelegenheit. Dabei sind der Abstand zwischen dem Sitz und der Biegepresse und auch die Position des Sitzes quer dazu, d.h. in Richtung parallel zur Biegelinie der Biegepresse, veränderbar. Das Verstellen einer solchen Trägerkonstruktion geht auch durch eine auf dem Sitz sitzende Bedienperson leichtgängig von statten. Das Vorsehen von Trägerelementen, die miteinander verbunden sind, ermöglicht eine besonders platzsparende Konstruktion. Dadurch kann der Raum vor der Biegepresse weitgehend frei bleiben, wodurch die Gefahr eines Stolperns minimiert wird.

Die Bewegungsfreiheitsgrade (rotatorisch oder linear) können z.B. in Form von (Dreh-)Gelenken und/oder Gleitlagern, Kugel- bzw. Rollenlager, verwirklicht sein. Letztere eignen sich auch für Linearachsen. Denkbar wären auch (Kulissen-)Führungen.

Eine Biegepresse umfasst üblicherweise längliche Werkzeughalterungen, in denen mehrere Biegewerkzeuge einsetzbar bzw. verschiebbar sind. Bei Vollführen einer Arbeitsbewegung wird die obere Werkzeughalterung (durch einen Pressantrieb) gegen die untere Werkzeughalterung bewegt. Dabei zwängen Oberwegzeug(e) und Unterwerkzeug(e) das zu bearbeitende Werkstück im Bereich der Biegelinie ein und bewirken dabei einen Biegevorgang.

Der Sitz ist so positionierbar, dass eine auf dem Sitz sitzende Person ein Werkstück zwischen die Werkzeughalterungen bzw. Werkzeuge einlegen bzw. positionieren kann. Der Sitz kann gepolstert, mit oder ohne Lehne ausgestattet sein und jede erdenkliche (ergonomische) Formgebung aufweisen. Der Sitz kann z.B. in Art eines Barhockers oder als Sessel ausgebildet sein.

Die Befestigungsstelle dient der insbesondere stationären Verankerung der Trägereinrichtung. Die Trägereinrichtung und somit auch der Sitz werden über die Befestigungsstelle gehalten bzw. getragen.

Eine bevorzugte Ausführungsform zeichnet sich dadurch aus, dass das erste Trägerelement und das zweite Trägerelement jeweils durch einen länglichen Trägerarm gebildet sind, wobei die Trägerarme im Bereich ihrer Enden miteinander verbunden sind. Durch diese Maßnahme wird eine besonders schlanke Konstruktion erreicht. Die durch die Trägerarme gebildete kinematische Kette nimmt kaum Platz in Anspruch.

Eine bevorzugte Ausführungsform zeichnet sich dadurch aus, dass die Trägereinrichtung zwischen der Befestigungsstelle und dem Sitz eine serielle Kinematik, vorzugsweise eine SCARA-Kinematik, ausbildet. Eine serielle Kinematik nimmt auch dann, wenn der Sitz nicht gebraucht wird und zur Seite bewegt wurde, kaum Platz in Anspruch. Eine SCARA (Selective Compliance Assembly Robot Arm) -Kinematik ist dabei besonders bevorzugt. Eine SCARA-Kinematik besitzt in der Regel vier Achsen bzw. (damit zusammenhängende) Freiheitsgrade. Sämtliche Achsen sind als serielle Kinematik ausgeführt, d.h. der Koordinatenursprung der folgenden Achse ist nur abhängig von der Position der vorhergehenden. Bei einer SCARA-Kinematik sind die erste und zweite Achse rotatorischer Natur, die dritte und die vierte Achse erlauben eine rotatorische und eine Linearbewegung. Der Aufbau einer SCARA-Kinematik ähnelt einem menschlichen Arm und weist daher eine hohe Flexibilität auf.

Eine bevorzugte Ausführungsform zeichnet sich dadurch aus, dass der erste Bewegungsfreiheitsgrad ein Rotationsfreiheitsgrad ist, dessen Rotationsachse vorzugsweise im Wesentlichen vertikal ist. Dadurch kann der Sitz auf einfache Weise verschwenkt werden, wodurch auch der Abstand zwischen Sitz und Biegepresse verändert werden kann.

Eine bevorzugte Ausführungsform zeichnet sich dadurch aus, dass der zweite Bewegungsfreiheitsgrad ein Rotationsfreiheitsgrad ist, dessen Rotationsachse vorzugsweise im Wesentlichen vertikal ist. Dadurch wird eine zweite Schwenkbewegung des Sitzes möglich. Durch Überlagerung der Bewegungen um den ersten und um den zweiten Bewegungsfreiheitsgrad kann jede beliebige Position des Sitzes relativ zur Biegepresse angenommen werden. Insbesondere kann dadurch der Abstand unabhängig von der Position entlang der (länglichen) Werkzeughalterungen eingestellt werden.

Eine bevorzugte Ausführungsform zeichnet sich dadurch aus, dass der zweite Bewegungsfreiheitsgrad ein linearer Freiheitsgrad ist, wobei vorzugsweise die Trägerelemente entlang ihrer Längserstreckung gegeneinander verschiebbar, vorzugsweise teleskopierbar, sind. Auch diese Ausführungsform ermöglicht (zumindest in den von der Kinematik vorgegebenen Grenzen) eine beliebige Positionierung des Sitzes vor der Biegepresse.

Eine bevorzugte Ausführungsform zeichnet sich dadurch aus, dass die Linearachse des zweiten Bewegungsfreiheitsgrades quer, vorzugsweise im Wesentlichen senkrecht, zur Rotationsachse des ersten Bewegungsfreiheitsgrades steht. Abstände von der Biegepresse können dabei besonders einfach und reproduzierbar eingestellt werden.

Eine bevorzugte Ausführungsform zeichnet sich dadurch aus, dass der Sitz mit dem zweiten Trägerelement verbunden ist und relativ zum zweiten Trägerelement einen dritten Bewegungsfreiheitsgrad und/oder einen vierten Bewegungsfreiheitsgrad aufweist. Hier können bei entsprechender Dimensionierung die Vorteile einer SCARA-Kinematik erzielt werden.

Eine bevorzugte Ausführungsform zeichnet sich dadurch aus, dass der dritte Bewegungsfreiheitsgrad ein Rotationsfreiheitsgrad ist, dessen Rotationsachse vorzugsweise im Wesentlichen vertikal ist, und/oder dass der vierte Bewegungsfreiheitsgrad ein linearer Freiheitsgrad, vorzugsweise in vertikaler Richtung, ist. Bevorzugt ist dabei, wenn der Sitz um seine eigene Achse drehbar ist (dritter Bewegungsfreiheitsgrad). Bevorzugt ist auch, wenn der Sitz nach oben und unten bewegbar ist (vierter Bewegungsfreiheitsgrad).

Die Erfindung zeichnet sich dadurch aus, dass die Befestigungsstelle der Trägereinrichtung an dem Gestell der Biegepresse angeordnet ist und die Trägereinrichtung und der Sitz vom Gestell der Biegepresse getragen werden. Durch eine Befestigungsstelle am Gestell wird bereits eine optimale Anbindung unabhängig vom Aufstellort der Biegepresse vorgegeben. Aufgrund des hohen Gewichts einer Biegepresse stellt die Verankerung der Trägereinrichtung (und damit auch des Sitzes) am Gestell kein Problem dar.

Eine bevorzugte Ausführungsform zeichnet sich dadurch aus, dass die Befestigungsstelle der Trägereinrichtung an dem Gestell in einem Bereich unterhalb der Werkzeughalterungen, vorzugsweise im bodennahen Bereich des Gestells, liegt. Die kinematische Kette der Trägereinrichtung kann dadurch sehr kurz gehalten werden. Die Sitzfläche befindet sich dabei oberhalb der Trägereinrichtung.

Die Erfindung zeichnet sich dadurch aus, dass die Befestigungsstelle der Trägereinrichtung an dem Gestell in einem Bereich oberhalb der Werkzeughalterungen, vorzugsweise im Bereich der Oberseite der Biegepresse, liegt. Durch diese Maßnahme kann der (Boden)Bereich vor der Biegepresse gänzlich freigehalten werden. Die Sitzfläche befindet sich dabei unterhalb der Trägereinrichtung. D.h. der Sitz hängt an der Trägereinrichtung.

Die Erfindung zeichnet sich dadurch aus, dass der Sitz und die Trägereinrichtung über dem Niveau der Aufstandsfläche der Biegepresse schwebend gehalten sind und zur Gänze vom Gestell der Biegepresse getragen werden. Dadurch wird einerseits ein leichtgängiges Verstellen des Sitzes gewährleistet, andererseits können keine Hindernisse am Boden die Verstellung behindern.

Eine bevorzugte Ausführungsform zeichnet sich dadurch aus, dass die Befestigungsstelle der Trägereinrichtung verschiebbar ist, vorzugsweise parallel zur Biegelinie der Biegepresse. Dadurch wird ein zusätzlicher Freiheitsgrad geschaffen, der insbesondere bei langen Biegepressen mit langen Werkzeughalterungen von Vorteil ist.

Eine bevorzugte Ausführungsform zeichnet sich dadurch aus, dass im Bereich des Sitzes, vorzugsweise im Kniebereich und/oder im Fußbereich, zumindest ein mit der Steuerung der Biegepresse verbundenes Betätigungselement, insbesondere zum Auslösen einer Arbeitsbewegung der Biegepresse, angeordnet ist. Damit kann nicht nur das Bestücken bzw. Positionieren von Werkstücken vom Sitz aus erfolgen, sondern auch die Steuerung der Biegepresse.

Eine bevorzugte Ausführungsform zeichnet sich dadurch aus, dass die Biegepressenanordnung zumindest einen Antrieb zur Verstellung der Trägereinrichtung hinsichtlich des ersten und/oder zweiten Bewegungsfreiheitsgrades aufweist, wobei vorzugsweise der Antrieb mittels eines vom Sitz aus erreichbaren Betätigungselementes ansteuerbar ist. Durch einen oder mehrere Verstellantriebe wird der Komfort für die Bedienperson weiter erhöht. Der Bediener muss sich nicht mehr aus eigener Kraft fortbewegen. Die Steuerung der Bewegungsachsen kann auch vom Bediener erfolgen (Joystick, Pedale, Neigung des Körperschwerpunktes, Gesten, Gedankensteuerung, akustische Signale, usw.) oder auch von der Biegepresse bzw. deren Steuerung (z.B.: vorprogrammierte Abfolge beim Stationenkanten).

Eine bevorzugte Ausführungsform zeichnet sich dadurch aus, dass die Biegepressenanordnung zumindest eine Bremse oder Arretierung aufweist, durch die der erste und/oder der zweite Bewegungsfreiheitsgrad einfrierbar sind, wobei vorzugsweise die Bremse oder Arretierung mittels eines vom Sitz aus erreichbaren Betätigungselementes ansteuerbar ist. Dadurch wird ein (unbeabsichtigtes) Verstellen z.B. während eines kritischen Arbeitsprozesses effizient verhindert. Die Bremse (bzw. Arretierung) kann direkt in ein Gelenk (durch das ein Bewegungsfreiheitsgrad der Trägereinrichtung realisiert ist) eingebaut werden. Die Bremse(n) kann/können z.B. als Scheibenbremse oder magnetische Bremse ausgebildet sein oder einen z.B. vertikal bewegbaren (Einrast)-Stössel umfassen.

Eine bevorzugte Ausführungsform zeichnet sich dadurch aus, dass der Sitz und/oder die Trägereinrichtung mit zumindest einem Sensor, vorzugsweise einem Kraft- oder Drucksensor, zusammenwirkt/-en, der mit der Steuerung der Biegepresse verbunden ist, wobei vorzugsweise der Sensor zur Registrierung und/oder Identifizierung einer Person auf dem Sitz ausgebildet ist. Die Steuerung kann dadurch automatisch erfassen, ob bzw. wann eine Person auf dem Sitz sitzt. In Abhängigkeit einer solchen Registrierung kann die Biegepresse in einen bestimmten Arbeitszustand versetzt werden (z.B. von ,Stand-By' in ,Ready to work') oder es können bestimmte Parameter geladen oder Einstellungen (z.B. individuelle Bedieneinstellungen) vorgenommen werden, z.B. in Abhängigkeit des Gewichtes der Bedienperson. Der Sensor kann dabei ein Kraft- oder Drucksensor, z.B. unterhalb der Sitzfläche des Sitzes, sein. Der Sensor kann aber auch ein bildgebender Sensor (Kamera) oder eine Lichtschrankenanordnung sein.

Eine bevorzugte Ausführungsform zeichnet sich dadurch aus, dass die Biegepressenanordnung eine Eingabeeinrichtung, insbesondere ein Bedienpanel oder eine Tastatur, und/oder eine Ausgabeeinrichtung, insbesondere einen Bildschirm, die mit der Steuerung der Biegepresse verbunden ist/sind, aufweist, wobei die Eingabeeinrichtung und/oder die Ausgabeeinrichtung von der Trägereinrichtung gehalten ist/sind und vorzugsweise zusammen mit dem Sitz hinsichtlich des ersten Bewegungsfreiheitsgrades und zweiten Bewegungsfreiheitsgrades bewegbar ist/sind. Die Benutzerfreundlichkeit wird dadurch weiter erhöht, da Bedienung, Parametereingabe, Auslösen der Arbeitsbewegung, allfälliges (visuelles) Feedback direkt mit der erfindungsgemäßen Sitzgelegenheit verknüpfbar sind.

In einer weiteren bevorzugten Ausführungsform ist der Sitz und/oder die Trägereinrichtung mit zumindest einer Halterung ausgestattet, insbesondere für Messinstrumente, Werkzeuge, Trinkbecher, etc. Die vom Sitz aus erreichbare Halterung kann als vorübergehende Ablage von diversen Gegenständen genutzt werden.

In einer weiteren bevorzugten Ausführungsform kann der Sitz und/oder die Trägereinrichtung mit zumindest einem Pedal ausgestattet sein, welches mechanisch mit zumindest einem Bewegungsfreiheitsgrad der Trägereinrichtung gekoppelt ist, sodass sich der Bediener durch Betätigung des Pedals (ähnlich wie bei einem Fahrrad) auf dem Sitz fortbewegen kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegepressenanordnung in schematischer Darstellung;
- Fig. 2: eine Biegepressenanordnung, bei der die Trägereinrichtung an dem Gestell der Biegepresse (im bodennahen Bereich) befestigt ist;
- Fig. 3: eine Biegepressenanordnung, bei der die Trägereinrichtung an dem Gestell der Biegepresse (im oberen Bereich) befestigt ist;
- Fig. 4: eine Trägereinrichtung, die an einem auf dem Boden aufliegenden Profil befestigt ist;
- Fig. 5: eine Trägereinrichtung, die im Boden verankert ist;
- Fig. 6: eine Variante der Trägereinrichtung mit gegeneinander teleskopierbaren Trägerelementen (in schematischer Darstellung);
- Fig. 7: eine besondere Ausbildung des Sitzes mit im Nahbereich des Sitzes angeordneten Betätigungselementen;
- Fig. 8: eine Trägereinrichtung mit Sitz sowie (in schematischer Darstellung) die Anbindung funktionaler Bestandteile an eine Steuereinrichtung.

Der Ordnung halber sei darauf hingewiesen, dass zum besseren Verständnis des Aufbaus Elemente teilweise unmaßstäblich und/oder vergrößert und/oder verkleinert dargestellt wurden.

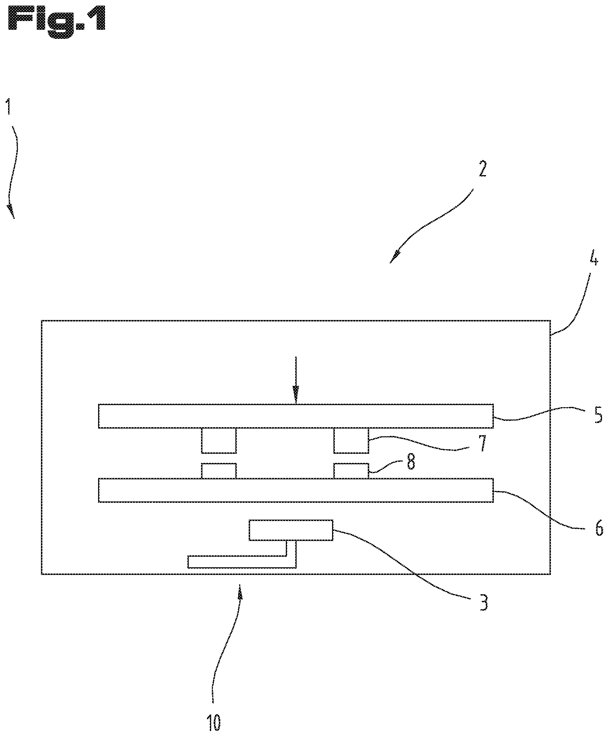

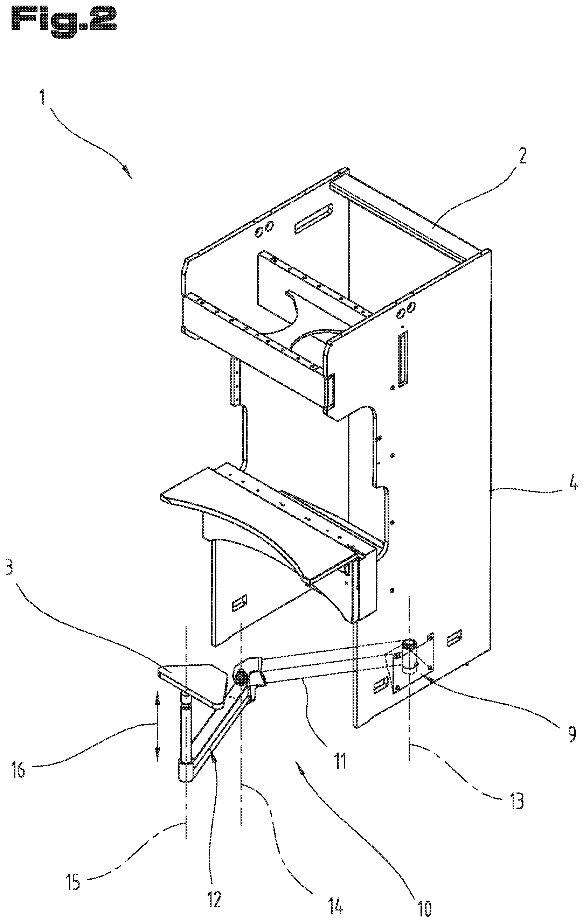

Fig. 1 zeigt eine Biegepressenanordnung 1 umfassend eine Biegepresse 2 und einen vor der Biegepresse 2 positionierbaren Sitz 3 für eine Bedienperson. Der Sitz 3 wird durch eine verstellbare Trägereinrichtung 10 getragen. Die Befestigungsstelle 9, an der die Trägereinrichtung 10 befestigt ist, ist in den Ausführungsformen der Figuren 2-6 dargestellt.

Die Biegepresse 2 weist ein Gestell 4 auf, welches eine erste Werkzeughalterung 5 und eine zweite Werkzeughalterung 6 trägt, wobei die erste Werkzeughalterung 5 zum Vollführen einer Arbeitsbewegung relativ zu der zweiten Werkzeughalterung 6 bewegbar ist (siehe vertikalen Pfeil in Fig. 1). In den Werkzeughalterungen 5, 6 sind Biegewerkzeuge 7, 8 eingesetzt. Das zu bearbeitende Werkstück wird zwischen die Biegewerkzeuge 7, 8 eingelegt. Anschließend wird der Pressenantrieb aktiviert, um die Arbeitsbewegung und somit den Biegevorgang auszuführen.

In den nachfolgenden Figuren 2-6, werden die Werkzeughalterungen sowie die Biegewerkzeuge (aus Gründen der Übersichtlichkeit) nicht mehr dargestellt.

Den Fig. 2-6 ist zu entnehmen, dass die Trägereinrichtung 10 zwischen der Befestigungsstelle 9 und dem Sitz 3 durch ein erstes Trägerelement 11, das relativ zum Gestell 4 einen ersten Bewegungsfreiheitsgrad aufweist, und ein zweites Trägerelement 12, das von dem ersten Trägerelement 11 getragen wird und relativ zu dem ersten Trägerelement 11 einen zweiten Bewegungsfreiheitsgrad aufweist, gebildet ist.

Dabei sind das erste Trägerelement 11 und das zweite Trägerelement 12 jeweils durch einen länglichen Trägerarm gebildet, wobei die Trägerarme im Bereich ihrer Enden miteinander verbunden sind. Die Trägereinrichtung 10 bildet somit zwischen der Befestigungsstelle 9 und dem Sitz 3 bevorzugt eine serielle Kinematik, z.B. eine SCARA-Kinematik, aus.

In den dargestellten Ausführungsformen ist der erste Bewegungsfreiheitsgrad ein Rotationsfreiheitsgrad, dessen Rotationsachse 13 im Wesentlichen vertikal ist.

Die Ausführungsformen der Fig. 2-5 zeigen, dass auch der zweite Bewegungsfreiheitsgrad ein Rotationsfreiheitsgrad mit im Wesentlichen vertikaler Rotationsachse 14 sein kann. Der erste und zweite Rotationsfreiheitsgrad sind mittels Drehgelenken bzw. Drehlagern realisiert.

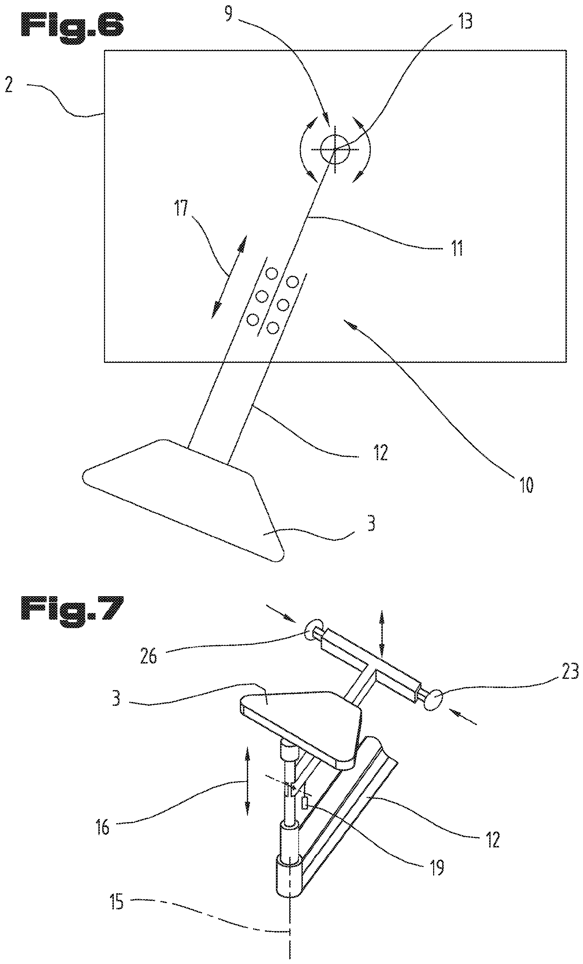

Hingegen ist in der in Fig. 6 gezeigten Alternative der zweite Bewegungsfreiheitsgrad ein linearer Freiheitsgrad. Dabei können die Trägerelemente 11, 12 entlang ihrer Längserstreckung gegeneinander verschiebbar, vorzugsweise teleskopierbar, sein. Die Linearachse 17 des zweiten Bewegungsfreiheitsgrades steht hier quer, vorzugsweise im Wesentlichen senkrecht, zur Rotationsachse 13 des ersten Bewegungsfreiheitsgrades. Die Linearachse 17 kann z.B. mittels eines Gleitlagers realisiert werden.

Es ist bevorzugt, wenn - wie dargestellt - der Sitz 3 mit dem zweiten Trägerelement 12 verbunden ist und relativ zum zweiten Trägerelement 12 einen dritten Bewegungsfreiheitsgrad (hier: vertikale Rotationsachse 15) und/oder einen vierten Bewegungsfreiheitsgrad (hier: vertikale Linearachse 16) aufweist. Dadurch kann sich die Bedienperson um die eigene Achse drehen und ihre Höhenlage verstellen.

In Fig. 2 ist die Befestigungsstelle 9 der Trägereinrichtung 10 an dem Gestell 4 der Biegepresse 2 angeordnet (hier: im bodennahen Bereich des Gestells 4). Die Trägereinrichtung 10 und der Sitz 3 werden hier zur Gänze vom Gestell 4 getragen, d.h. es erfolgt keine Abstützung an anderer Stelle.

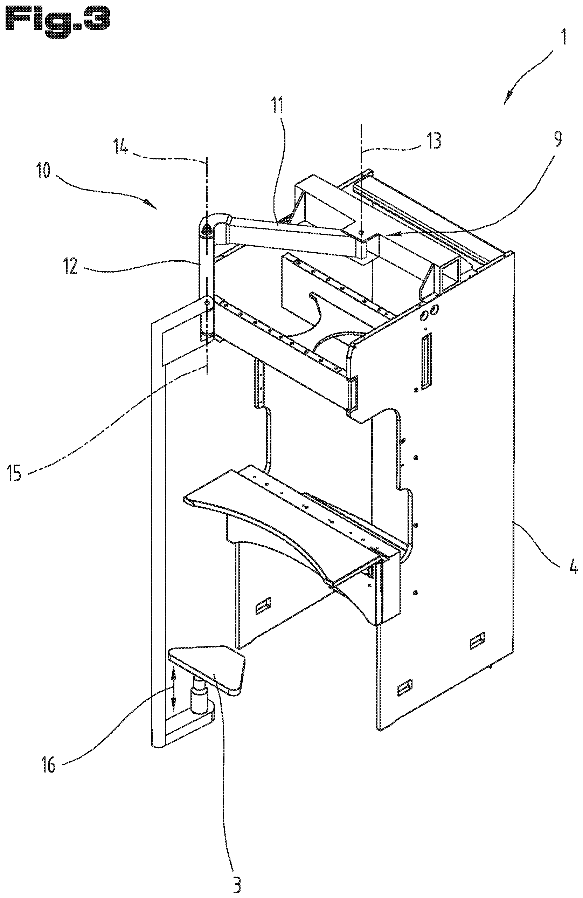

Alternativ dazu zeigt Fig. 3 eine Variante, bei der die Befestigungsstelle 9 an dem Gestell 4 in einem Bereich oberhalb der Werkzeughalterungen (hier: im Bereich der Oberseite der Biegepresse 2) liegt.

Beiden Ausführungen ist gemein, dass der Sitz 3 und die Trägereinrichtung 10 über dem Niveau der Aufstandsfläche der Biegepresse 2 schwebend gehalten sind. Sitz und Trägereinrichtung werden ausschließlich über die Befestigungsstelle 9 gehalten.

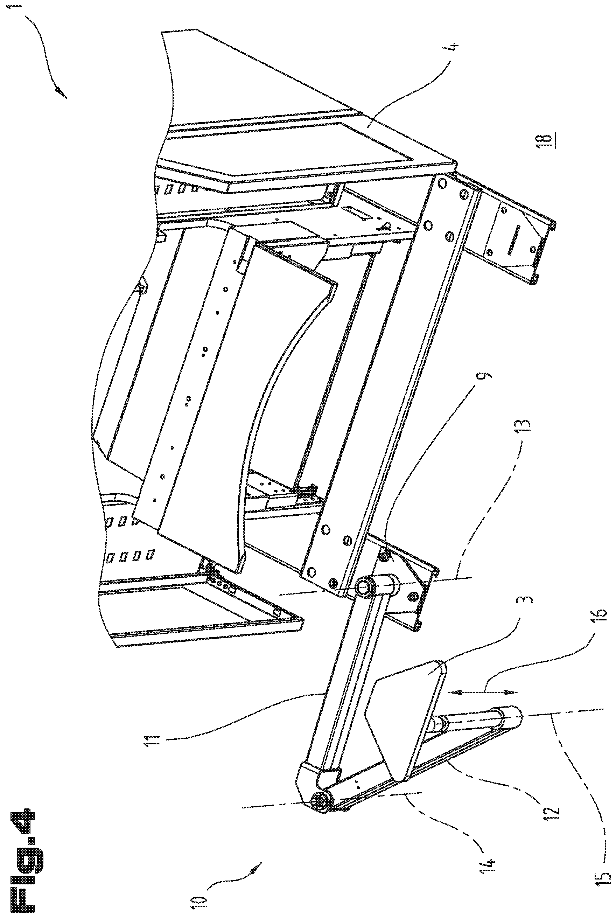

Fig. 4 zeigt eine Variante, bei der die Befestigungsstelle 9 an einem auf dem Boden 18 aufliegenden Profil (vor bzw. unter der Biegepresse 2) ausgebildet ist. Der Abstand der Befestigungsstelle 9 von dem Gestell 4 beträgt dabei höchstens 2m, bevorzugt höchstens 1m, besonders bevorzugt höchstens 0,5m. Das Profil, an dem die Trägereinrichtung 10 verankert ist, kann zwischen dem Boden 18 und dem Gestell 4 eingeklemmt sein (siehe Fig. 4).

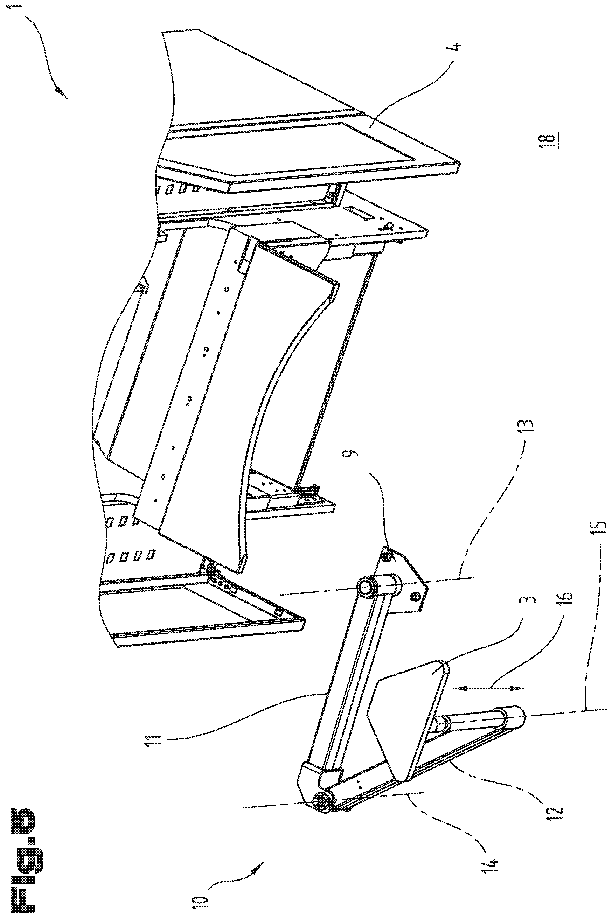

Fig. 5 zeigt eine Variante, bei der die Befestigungsstelle 9 direkt am Boden 18 - im Bereich vor oder seitlich der Biegepresse 2 - angeordnet ist.

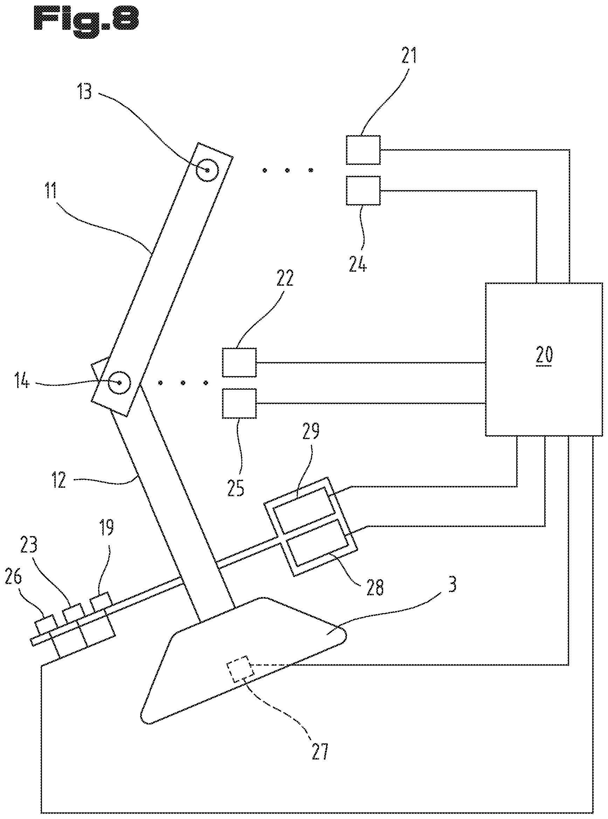

Die in Fig. 7 und 8 dargestellten Ausführungsformen weisen erweiterte Funktionalität auf. So umfasst der Sitz in Fig. 7 - an abstehenden Halterungen bzw. Haltestangen - diverse Betätigungselemente 19, 23, 26 für die Bedienperson. Im Bereich des Sitzes 3, vorzugsweise im Kniebereich und/oder im Fußbereich, kann somit zumindest ein mit der Steuerung 20 (Fig. 8) der Biegepresse 2 verbundenes Betätigungselement 19, insbesondere zum Auslösen einer Arbeitsbewegung (d.h. zum Ansteuern des Pressenantriebs), angeordnet sein.

Fig. 8 ist zu entnehmen, dass die Biegepressenanordnung 1 zumindest einen Antrieb 21, 22 zur Verstellung der Trägereinrichtung 10 hinsichtlich des ersten und/oder zweiten Bewegungsfreiheitsgrades aufweisen kann. Dabei kann der Antrieb 21, 22 mittels eines vom Sitz 3 aus erreichbaren Betätigungselementes 23 ansteuerbar sein.

Fig. 8 ist weiters zu entnehmen, dass die Biegepressenanordnung 1 zumindest eine Bremse 24, 25 oder Arretierung aufweisen kann, durch die der erste und/oder der zweite Bewegungsfreiheitsgrad einfrierbar (d.h. feststellbar) sind. Dabei kann die Bremse 24, 25 oder Arretierung mittels eines vom Sitz 3 aus erreichbaren Betätigungselementes 26 ansteuerbar sein.

Fig. 8 zeigt auch einen Sensor, mit dem der Sitz 3 (alternativ oder zusätzlich: die Trägereinrichtung 10) mit zumindest einem Sensor 27, vorzugsweise einem Kraft- oder Drucksensor, zusammenwirkt. Der Sensor 27 ist mit der Steuerung 20 der Biegepresse 2 verbunden und kann z.B. zur Registrierung/Identifizierung einer Person (Anwesenheit, Gewicht, Bewegungen der Person, etc.) auf dem Sitz 3 ausgebildet sein.

Schließlich kann die Biegepressenanordnung 1 auch eine Eingabeeinrichtung 28, insbesondere ein Bedienpanel oder eine Tastatur, und/oder eine Ausgabeeinrichtung 29, insbesondere einen Bildschirm, die mit der Steuerung 20 verbunden ist/sind, aufweisen (siehe Fig. 8)

Dabei sind die Eingabeeinrichtung 28 bzw. die Ausgabeeinrichtung 29 von der Trägereinrichtung 10 gehalten. Sie können zusammen mit dem Sitz 3 hinsichtlich des ersten Bewegungsfreiheitsgrades und zweiten Bewegungsfreiheitsgrades bewegt werden.

Die Erfindung ist nicht auf die dargestellten Ausführungsformen beschränkt. So können beispielsweise mehr als nur zwei Trägerelemente vorgesehen sein, wodurch die kinematische Kette mehrere gegeneinander bewegbare Glieder erhält.

Auch müssen die Freiheitsgrade nicht unbedingt durch vertikale Rotationsachsen gebildet sein. So wäre es denkbar, die Rotationsachse des ersten Bewegungsfreiheitsgrades horizontal zu stellen, während eine Linearachse des zweiten Bewegungsfreiheitsgrades die Höhenänderung des Sitzes ausgleicht. Vorteilhaft wären insbesondere auch in diesem Fall Antriebe, die einerseits gegen die Schwerkraft wirken, andererseits automatisch eine Kompensation der veränderten Höhenlage vornehmen. Selbstverständlich sind auch andere Orientierungen der Rotationsachsen denkbar.

Während in den dargestellten Ausführungsformen die Befestigungsstelle 9 stationär ist (entweder am Boden, an einem ruhenden Profil oder am Gestell der Biegepresse) könnte die Befestigungsstelle der Trägereinrichtung 10 - z.B. als in einer Schiene geführter Schlitten - auch verschiebbar sein, vorzugsweise parallel zur Biegelinie der Biegepresse 2.

### Bezugszeichenaufstellung

- 1: Biegepressenanordnung
- 2: Biegepresse
- 3: Sitz
- 4: Gestell
- 5: Erste Werkzeughalterung
- 6: Zweite Werkzeughalterung
- 7: Erstes Werkzeug
- 8: Zweites Werkzeug
- 9: Befestigungsstelle
- 10: Trägereinrichtung
- 11: Erstes Trägerelement
- 12: Zweites Trägerelement
- 13: Rotationsachse
- 14: Rotationsachse
- 15: Rotationsachse
- 16: Linearachse
- 17: Linearachse
- 18: Boden
- 19: Betätigungselement
- 20: Steuerung
- 21: Antrieb
- 22: Antrieb
- 23: Betätigungselement
- 24: Bremse
- 25: Bremse
- 26: Betätigungselement
- 27: Sensor
- 28: Eingabeeinrichtung
- 29: Ausgabeeinrichtung

## Patentansprüche

1. Biegepressenanordnung (1) umfassend:
- eine Biegepresse (2) zum Biegen von Werkstücken, insbesondere eine Abkantpresse,
- einen vor der Biegepresse (2) positionierbaren Sitz (3) für eine Bedienperson der Biegepresse (2), und
- eine verstellbare Trägereinrichtung (10), die den Sitz (3) trägt und an einer Befestigungsstelle (9) befestigt ist,
wobei die Biegepresse (2) ein Gestell (4) aufweist, welches eine erste Werkzeughalterung (5) und eine zweite Werkzeughalterung (6) trägt, wobei die erste Werkzeughalterung (5) zum Vollführen einer Arbeitsbewegung relativ zu der zweiten Werkzeughalterung (6) bewegbar ist,
**dadurch gekennzeichnet, dass** die Trägereinrichtung (10) zwischen der Befestigungsstelle (9) und dem Sitz (3) durch ein erstes Trägerelement (11), das relativ zum Gestell (4) einen ersten Bewegungsfreiheitsgrad aufweist, und ein zweites Trägerelement (12), das von dem ersten Trägerelement (11) getragen wird und relativ zu dem ersten Trägerelement (11) einen zweiten Bewegungsfreiheitsgrad aufweist, gebildet ist,
und dass die Befestigungsstelle (9) der Trägereinrichtung (10) an dem Gestell (4) der Biegepresse (2) angeordnet ist und die Trägereinrichtung (10) und der Sitz (3) vom Gestell (4) der Biegepresse (2) getragen werden,
wobei die Befestigungsstelle (9) der Trägereinrichtung (10) an dem Gestell (4) in einem Bereich oberhalb der Werkzeughalterungen (5, 6) liegt
und/oder der Sitz (3) und die Trägereinrichtung (10) über dem Niveau der Aufstandsfläche der Biegepresse (2) schwebend gehalten sind und zur Gänze vom Gestell (4) der Biegepresse (2) getragen werden.

2. Biegepressenanordnung nach Anspruch 1, **dadurch gekennzeichnet, dass** das erste Trägerelement (11) und das zweite Trägerelement (12) jeweils durch einen länglichen Trägerarm gebildet sind, wobei die Trägerarme im Bereich ihrer Enden miteinander verbunden sind.

3. Biegepressenanordnung nach Anspruch 1 oder 2, **dadurch gekennzeichnet, dass** die Trägereinrichtung (10) zwischen der Befestigungsstelle (9) und dem Sitz (3) eine serielle Kinematik, vorzugsweise eine SCARA-Kinematik, ausbildet.

4. Biegepressenanordnung nach einem der vorhergehenden Ansprüche, **dadurch gekennzeichnet, dass** der erste Bewegungsfreiheitsgrad ein Rotationsfreiheitsgrad ist, dessen Rotationsachse (13) vorzugsweise im Wesentlichen vertikal ist.

5. Biegepressenanordnung nach einem der vorhergehenden Ansprüche, **dadurch gekennzeichnet, dass** der zweite Bewegungsfreiheitsgrad ein Rotationsfreiheitsgrad ist, dessen Rotationsachse (14) vorzugsweise im Wesentlichen vertikal ist.

6. Biegepressenanordnung nach einem der vorhergehenden Ansprüche, **dadurch gekennzeichnet, dass** der zweite Bewegungsfreiheitsgrad ein linearer Freiheitsgrad ist, wobei vorzugsweise die Trägerelemente (11, 12) entlang ihrer Längserstreckung gegeneinander verschiebbar, vorzugsweise teleskopierbar, sind.

7. Biegepressenanordnung nach Anspruch 6, **dadurch gekennzeichnet, dass** die Linearachse (17) des zweiten Bewegungsfreiheitsgrades quer, vorzugsweise im Wesentlichen senkrecht, zur Rotationsachse (13) des ersten Bewegungsfreiheitsgrades steht.

8. Biegepressenanordnung nach einem der vorhergehenden Ansprüche, **dadurch gekennzeichnet, dass** der Sitz (3) mit dem zweiten Trägerelement (12) verbunden ist und relativ zum zweiten Trägerelement (12) einen dritten Bewegungsfreiheitsgrad und/oder einen vierten Bewegungsfreiheitsgrad aufweist.

9. Biegepressenanordnung nach Anspruch 8, **dadurch gekennzeichnet, dass** der dritte Bewegungsfreiheitsgrad ein Rotationsfreiheitsgrad ist, dessen Rotationsachse (15) vorzugsweise im Wesentlichen vertikal ist, und/oder dass der vierte Bewegungsfreiheitsgrad ein linearer Freiheitsgrad ist, dessen Linearachse (16) sich vorzugsweise in Wesentlichen vertikal erstreckt.

10. Biegepressenanordnung nach einem der Ansprüche 1 bis 9, **dadurch gekennzeichnet, dass** der Sitz (3) und die Trägereinrichtung (10) über dem Niveau der Aufstandsfläche der Biegepresse (2) schwebend gehalten sind und zur Gänze vom Gestell (4) der Biegepresse (2) getragen werden und dass die Befestigungsstelle (9) der Trägereinrichtung (10) an dem Gestell (4) in einem Bereich unterhalb der Werkzeughalterungen (5, 6), vorzugsweise im bodennahen Bereich des Gestells (4), liegt.

11. Biegepressenanordnung nach einem der Ansprüche 1 bis 9, **dadurch gekennzeichnet, dass** die Befestigungsstelle (9) der Trägereinrichtung (10) an dem Gestell (4) im Bereich der Oberseite der Biegepresse (2) liegt.

12. Biegepressenanordnung nach einem der vorhergehenden Ansprüche, **dadurch gekennzeichnet, dass** die Befestigungsstelle (9) der Trägereinrichtung (10) verschiebbar ist, vorzugsweise parallel zur Biegelinie der Biegepresse (2).

13. Biegepressenanordnung nach einem der vorhergehenden Ansprüche, **dadurch gekennzeichnet, dass** im Bereich des Sitzes (3), vorzugsweise im Kniebereich und/oder im Fußbereich, zumindest ein mit der Steuerung (20) der Biegepresse (2) verbundenes Betätigungselement (19), insbesondere zum Auslösen einer Arbeitsbewegung der Biegepresse (2), angeordnet ist.

14. Biegepressenanordnung nach einem der vorhergehenden Ansprüche, **dadurch gekennzeichnet, dass** die Biegepressenanordnung (1) zumindest einen Antrieb (21, 22) zur Verstellung der Trägereinrichtung (10) hinsichtlich des ersten und/oder zweiten Bewegungsfreiheitsgrades aufweist, wobei vorzugsweise der Antrieb (21, 22) mittels eines vom Sitz (3) aus erreichbaren Betätigungselementes (23) ansteuerbar ist.

15. Biegepressenanordnung nach einem der vorhergehenden Ansprüche, **dadurch gekennzeichnet, dass** die Biegepressenanordnung (1) zumindest eine Bremse (24, 25) oder Arretierung aufweist, durch die der erste und/oder der zweite Bewegungsfreiheitsgrad einfrierbar sind, wobei vorzugsweise die Bremse (24, 25) oder Arretierung mittels eines vom Sitz (3) aus erreichbaren Betätigungselementes (26) ansteuerbar ist.

16. Biegepressenanordnung nach einem der vorhergehenden Ansprüche, **dadurch gekennzeichnet, dass** der Sitz (3) und/oder die Trägereinrichtung (10) mit zumindest einem Sensor (27), vorzugsweise einem Kraft- oder Drucksensor, zusammenwirkt/-en, der mit der Steuerung (20) der Biegepresse (2) verbunden ist, wobei vorzugsweise der Sensor (27) zur Registrierung und/oder Identifizierung einer Person auf dem Sitz (3) ausgebildet ist.

17. Biegepressenanordnung nach Anspruch 16, **dadurch gekennzeichnet, dass** die Steuerung (20) der Biegepresse (2) ausgebildet ist, automatisch zu erfassen, ob bzw. wann eine Person auf dem Sitz (3) sitzt, wobei in Abhängigkeit einer solchen Registrierung die Biegepresse (2) in einen bestimmten Arbeitszustand versetzbar ist, insbesondere von einem , Stand-By'-Zustand in einen ,Ready to work'-Zustand, oder bestimmte Parameter geladen oder Einstellungen, insbesondere individuelle Bedieneinstellungen, vorgenommen werden, insbesondere in Abhängigkeit des Gewichtes der Bedienperson.

18. Biegepressenanordnung nach Anspruch 16 oder 17, **dadurch gekennzeichnet, dass** der Sensor (27) ein Kraft- oder Drucksensor, vorzugsweise unterhalb der Sitzfläche des Sitzes (3), ist, oder dass der Sensor (27) ein bildgebender Sensor, insbesondere eine Kamera, oder eine Lichtschrankenanordnung ist.

19. Biegepressenanordnung nach einem der vorhergehenden Ansprüche, **dadurch gekennzeichnet, dass** die Biegepressenanordnung (1) eine Eingabeeinrichtung (28), insbesondere ein Bedienpanel oder eine Tastatur, und/oder eine Ausgabeeinrichtung (29), insbesondere einen Bildschirm, die mit der Steuerung (20) der Biegepresse (2) verbunden ist/sind, aufweist, wobei die Eingabeeinrichtung (28) und/oder die Ausgabeeinrichtung (29) von der Trägereinrichtung (10) gehalten ist/sind und vorzugsweise zusammen mit dem Sitz (3) hinsichtlich des ersten Bewegungsfreiheitsgrades und zweiten Bewegungsfreiheitsgrades bewegbar ist/sind.

20. Biegepressenanordnung nach einem der vorhergehenden Ansprüche, **dadurch gekennzeichnet, dass** die Biegepressenanordnung (1) eine mit der Steuerung (20) der Biegepresse (2) verbundene Ausgabeeinrichtung (29) in Form eines Bildschirmes aufweist, wobei die Ausgabeeinrichtung (29) von der Trägereinrichtung (10) gehalten ist und zusammen mit dem Sitz (3) hinsichtlich des ersten Bewegungsfreiheitsgrades und zweiten Bewegungsfreiheitsgrades bewegbar ist.

21. Biegepressenanordnung nach einem der vorhergehenden Ansprüche, **dadurch gekennzeichnet, dass** die Biegepressenanordnung (1) eine mit der Steuerung (20) der Biegepresse (2) verbundene Eingabeeinrichtung (28) in Form eines Bedienpanels oder einer Tastatur aufweist, wobei die Eingabeeinrichtung (28) von der Trägereinrichtung (10) gehalten ist und zusammen mit dem Sitz (3) hinsichtlich des ersten Bewegungsfreiheitsgrades und zweiten Bewegungsfreiheitsgrades bewegbar ist.

## Claims

1. A bending press arrangement (1) comprising:
- a bending press (2) for bending workpieces, in particular a press brake,
- a seat (3) for an operator of said bending press (2), said seat being positionable in front of the bending press (2), and
- an adjustable support means (10) which supports the seat (3) and is secured at a securing location (9),
wherein the bending press (2) has a frame (4) that supports a first tool holder (5) and a second tool holder (6), wherein the first tool holder (5) can be moved relative to the second tool holder (6) in order to execute a working movement,
**characterized in that** the support means (10), between the securing location (9) and the seat (3), is formed by a first support element (11) having, relative to the frame (4), a first degree of freedom of movement and a second support element (12) that is supported by the first support element (11) and has, relative to the first support element (11), a second degree of freedom of movement,
and that the securing location (9) of the support means (10) is arranged on the frame (4) of the bending press (2) and the support means (10) and the seat (3) are supported by the frame (4) of the bending press (2),
wherein the securing location (9) of the support means (10) on the frame (4) is located in a region above the tool holders (5, 6),
and/or the seat (3) and the support means (10) are suspended above the level of the footprint of the bending press (2) and supported entirely by the frame (4) of the bending press (2).

2. The bending press arrangement according to claim 1, **characterized in that** the first support element (11) and the second support element (12) are each formed by an elongated support arm, wherein the support arms are connected to one another in the region of their ends.

3. The bending press arrangement according to claim 1 or 2, **characterized in that** the support means (10) forms a serial kinematics, preferably a SCARA kinematics, between the securing location (9) and the seat (3).

4. The bending press arrangement according to one of the preceding claims, **characterized in that** the first degree of freedom of movement is a rotational degree of freedom, the rotational axis (13) of which preferably is essentially vertical.

5. The bending press arrangement according to one of the preceding claims, **characterized in that** the second degree of freedom of movement is a rotational degree of freedom, the rotational axis (14) of which preferably is essentially vertical.

6. The bending press arrangement according to one of the preceding claims, **characterized in that** the second degree of freedom of movement is a linear degree of freedom, wherein preferably the support elements (11, 12) can be displaced, in particular telescoped, against one another along their longitudinal extension.

7. The bending press arrangement according to claim 6, **characterized in that** the linear axis (17) of the second degree of freedom of movement is transverse, preferably essentially perpendicular, to the rotational axis (13) of the first degree of freedom of movement.

8. The bending press arrangement according to one of the preceding claims, **characterized in that** the seat (3) is connected to the second support element (12) and has, relative to the second support element (12), a third degree of freedom of movement and/or a fourth degree of freedom of movement.

9. The bending press arrangement according to claim 8, **characterized in that** the third degree of freedom of movement is a rotational degree of freedom, the rotational axis (15) of which preferably is essentially vertical, and/or that the fourth degree of freedom of movement is a linear degree of freedom, the linear axis (16) of which preferably extends essentially vertically.

10. The bending press arrangement according to one of claims 1 to 9, **characterized in that** the seat (3) and the support means (10) are suspended above the level of the footprint of the bending press (2) and supported entirely by the frame (4) of the bending press (2), and that the securing location (9) of the support means (10) on the frame (4) is located in a region below the tool holders (5, 6), preferably in the region of the frame (4) close to the ground.

11. The bending press arrangement according to one of claims 1 to 9, **characterized in that** the securing location (9) of the support means (10) on the frame (4) is located in the region of the upper side of the bending press (2).

12. The bending press arrangement according to one of the preceding claims, **characterized in that** the securing location (9) of the support means (10) is displaceable, preferably in parallel to the bending line of the bending press (2).

13. The bending press arrangement according to one of the preceding claims, **characterized in that** at least one operating element (19) connected to the controller (20) of the bending press (2), in particular for triggering a working movement of the bending press (2), is arranged in the region of the seat (3), preferably in the knee region and/or in the foot region.

14. The bending press arrangement according to one of the preceding claims, **characterized in that** the bending press arrangement (1) comprises at least one drive (21, 22) for adjusting the support means (10) with respect to the first and/or the second degree of freedom of movement, wherein preferably the drive (21, 22) can be controlled by means of an operating element (23) that can be reached from the seat (3).

15. The bending press arrangement according to one of the preceding claims, **characterized in that** the bending press arrangement (1) comprises at least one brake (24, 25) or locking, by means of which the first and/or the second degree of freedom of movement can be blocked, wherein preferably the brake (24, 25) or the locking are controllable by means of an operating element (26) that can be reached from the seat (3).

16. The bending press arrangement according to one of the preceding claims, **characterized in that** the seat (3) and/or the support means (10) cooperate/s with at least one sensor (27), preferably a force sensor or a pressure sensor, which is connected to the controller (20) of the bending press (2), wherein preferably the sensor (27) is designed for registering and/or identifying a person on the seat (3).

17. The bending press arrangement according to claim 16, **characterized in that** the controller (20) of the bending press (2) is configured to automatically detect whether and/or when a person is seated on the seat (3), wherein, depending on such a registration, the bending press (2) can be put into a specific working mode, in particular from a "stand by" mode into a "ready to work" mode, or specific parameters are loaded or settings, in particular individual operating settings, can be made, in particular depending on the weight of the operator.

18. The bending press arrangement according to claim 16 or 17, **characterized in that** the sensor (27) is a force sensor or a pressure sensor, preferably below the seating surface of the seat (3), or that the sensor (27) is an imaging sensor, in particular a camera, or a light barrier arrangement.

19. The bending press arrangement according to one of the preceding claims, **characterized in that** the bending press arrangement (1) comprises an input device (28), in particular an operating panel or a keyboard, and/or an output device (29), in particular a screen, which is/are connected to the controller (20) of the bending press (2), wherein the input device (28) and/or the output device (29) is/are held by the support means (10) and is/are preferably movable along with the seat (3) with respect to the first degree of freedom of movement and the second degree of freedom of movement.

20. The bending press arrangement according to one of the preceding claims, **characterized in that** the bending press arrangement (1) has an output device (29) in the form of a screen connected to the controller (20) of the bending press (2), wherein the output device (29) is held by the support means (10) and is movable along with the seat (3) with respect to the first degree of freedom of movement and the second degree of freedom of movement.

21. The bending press arrangement according to one of the preceding claims, **characterized in that** the bending press arrangement (1) has an input device (28) in the form of an operating panel or a keyboard connected to the controller (20) of the bending press (2), wherein the input device (28) is held by the support means (10) and is movable along with the seat (3) with respect to the first degree of freedom of movement and the second degree of freedom of movement.

## Revendications

1. Dispositif de presse à plier (1) comprenant :
- une presse à plier (2) pour le pliage de pièces, plus particulièrement une presse plieuse,
- un siège (3), pouvant être positionné devant la presse à plier (2) pour un opérateur de la presse à plier (2) et
- un dispositif de support réglable (10) qui supporte le siège (3) et qui est fixé au niveau d'un point de fixation (9),
dans lequel la presse à plier (2) comprend un bâti (4) qui supporte un premier porte-outil (5) et un deuxième porte-outil (6), dans lequel le premier porte-outil (5) peut être déplacé par rapport au deuxième porte-outil (6) pour l'exécution d'un mouvement de travail,
**caractérisé en ce que** le dispositif de support (10) est constitué, entre le point de fixation (9) et le siège (3), d'un premier élément de support (11), qui présente, par rapport au bâti (4), un premier degré de liberté de mouvement, et un deuxième élément de support (12), qui est supporté par le premier élément de support (11) et qui présente, par rapport au premier élément de support (11), un deuxième degré de liberté de mouvement,
et **en ce que** le point de fixation (9) du dispositif de support (10) est disposé sur le bâti (4) de la presse à plier (2) et le dispositif de support (10) et le siège (3) sont supportés par le bâti (4) de la presse à plier (2),
dans lequel le point de fixation (9) du dispositif de support (10) se trouve, sur le bâti (4), dans une zone au-dessus des porte-outils (5, 6),
et/ou le siège (3) et le dispositif de support (10) sont maintenus de manière suspendue au-dessus du niveau de la surface d'implantation de la presse à plier (2) et supportés entièrement par le bâti (4) de la presse à plier (2).

2. Dispositif de presse à plier selon la revendication 1, **caractérisé en ce que** le premier élément de support (11) et le deuxième élément de support (12) sont constitués chacun d'un bras de support allongé, dans lequel les bras allongés sont reliés entre eux au niveau de leurs extrémités.

3. Dispositif de presse à plier selon la revendication 1 ou 2, **caractérisé en ce que** le dispositif de support (10) constitue, entre le point de fixation (9) et le siège (3), une cinématique sérielle, de préférence une cinématique SCARA

4. Dispositif de presse à plier selon l'une des revendications précédentes, **caractérisé en ce que** le premier degré de liberté de mouvement est un degré de liberté de rotation dont l'axe de rotation (13) est de préférence globalement vertical.

5. Dispositif de presse à plier selon l'une des revendications précédentes, **caractérisé en ce que** le deuxième degré de liberté de mouvement est un degré de liberté de rotation, dont l'axe de rotation (14) est de préférence globalement vertical.

6. Dispositif de presse à plier selon l'une des revendications précédentes, **caractérisé en ce que** le deuxième degré de liberté de mouvement est un degré de liberté linéaire, dans lequel, de préférence, les éléments de support (11, 12) sont coulissants, de préférence de manière télescopique, les uns par rapport aux autres le long de leur extension longitudinale.

7. Dispositif de presse à plier selon la revendication 6, **caractérisé en ce que** l'axe linéaire (17) du deuxième degré de liberté de mouvement est transversal, de préférence globalement perpendiculaire, par rapport à l'axe de rotation (13) du premier degré de liberté de mouvement.

8. Dispositif de presse à plier selon l'une des revendications précédentes, **caractérisé en ce que** le siège (3) est relié avec le deuxième élément de support (12) et présente, par rapport au deuxième élément de support (12), un troisième degré de liberté de mouvement et/ou un quatrième degré de liberté de mouvement.

9. Dispositif de presse à plier selon la revendication 8, **caractérisé en ce que** le troisième degré de liberté de mouvement est un degré de liberté de rotation, dont l'axe de rotation (15) est de préférence globalement vertical, et/ou **en ce que** le quatrième degré de liberté de mouvement est un degré de liberté linéaire, dont l'axe linéaire (16) s'étend de préférence globalement verticalement.

10. Dispositif de presse à plier selon l'une des revendications 1 à 9, **caractérisé en ce que** le siège (3) et le dispositif de support (10) sont maintenus de manière suspendue au-dessus du niveau de la surface d'implantation de la presse à plier (2) et sont supportés entièrement par le bâti (4) de la presse à plier (2) et **en ce que** le point de fixation (9) du dispositif de support (10) se trouve sur le bâti (4) dans une zone en dessous des porte-outils (5, 6), de préférence dans la zone proche du sol du bâti (4).

11. Dispositif de presse à plier selon l'une des revendications 1 à 9, **caractérisé en ce que** le point de fixation (9) du dispositif de support (10) se trouve sur le bâti (4) dans la zone du côté supérieur de la presse à plier (2).

12. Dispositif de presse à plier selon l'une des revendications précédentes, **caractérisé en ce que** le point de fixation (9) du dispositif de support (10) est coulissant, de préférence parallèlement à la ligne de pliage de la presse à plier (2).

13. Dispositif de presse à plier selon l'une des revendications précédentes, **caractérisé en ce que**, au niveau du siège (3), de préférence au niveau des genoux et/ou des pieds, est disposé au moins un élément d'actionnement (19) relié avec la commande (20) de la presse à plier (2), plus particulièrement pour le déclenchement du mouvement de travail de la presse à plier (2).

14. Dispositif de presse à plier selon l'une des revendications précédentes, **caractérisé en ce que** le dispositif de presse à plier (1) comprend au moins un entraînement (21, 22) pour le déplacement du dispositif de support (10) en ce qui concerne le premier et/ou le deuxième degré de liberté de mouvement, dans lequel, de préférence, l'entraînement (21, 22) peut être contrôlé au moyen d'un élément d'actionnement (23) pouvant être atteint à partir du siège (3).

15. Dispositif de presse à plier selon l'une des revendications précédentes, **caractérisé en ce que** le dispositif de presse à plier (1) comprend au moins un frein (24, 25) ou un dispositif d'arrêt grâce auquel le premier et/ou le deuxième degré de liberté de mouvement peut être bloqué, de préférence le frein (24, 25) ou dispositif d'arrêt peut être contrôlé au moyen d'un élément d'actionnement (26) pouvant être atteint à partir du siège (3).

16. Dispositif de presse à plier selon l'une des revendications précédentes, **caractérisé en ce que** le siège (3) et/ou le dispositif de support (10) interagit avec au moins un capteur (27), de préférence un capteur de force ou de pression, qui est relié avec la commande (20) de la presse à plier (2), dans lequel, de préférence, le capteur (27) est conçu pour l'enregistrement et/ou l'identification d'une personne sur le siège (3).

17. Dispositif de presse à plier selon la revendication 16, **caractérisé en ce que** la commande (20) de la presse à plier (2) est conçue pour détecter automatiquement si ou quand une personne est assise sur le siège (3), dans lequel, en fonction d'un tel enregistrement, la presse à plier (2) peut être mise dans un état de travail déterminé, plus particulièrement d'un état de « stand-by » dans un état « ready to work », ou des paramètres déterminés sont chargés ou des réglages, plus particulièrement des réglages de fonctionnement individuels, sont effectués, plus particulièrement en fonction du poids de l'opérateur.

18. Dispositif de presse à plier selon la revendication 16 ou 17, **caractérisé en ce que** le capteur (27) est un capteur de force ou de pression, de préférence en dessous de la surface d'assise du siège (3) ou **en ce que** le capteur (27) est un capteur d'image, plus particulièrement une caméra ou un dispositif de barrière photoélectrique.

19. Dispositif de presse à plier selon l'une des revendications précédentes, **caractérisé en ce que** le dispositif de presse à plier (1) comprend un dispositif d'entrée (28), plus particulièrement un panneau de commande ou un clavier et/ou un dispositif de sortie (29), plus particulièrement un écran, qui est relié avec la commande (20) de la presse à plier (2), dans lequel le dispositif d'entrée (28) et/ou le dispositif de sortie (29) est maintenu par le dispositif de support (10) et peut être déplacé de préférence conjointement avec le siège (3) en ce qui concerne le premier degré de liberté de mouvement et le deuxième degré de liberté de mouvement.

20. Dispositif de presse à plier selon l'une des revendications précédentes, **caractérisé en ce que** le dispositif de presse à plier (1) comprend un dispositif de sortie (29) relié avec la commande (20) de la presse à plier (2), sous la forme d'un écran, dans lequel le dispositif de sortie (29) est maintenu par le dispositif de support (10) et peut être déplacé conjointement avec le siège (3) en ce qui concerne le premier degré de liberté de mouvement et le deuxième degré de liberté de mouvement.

21. Dispositif de presse à plier selon l'une des revendications précédentes, **caractérisé en ce que** le dispositif de presse à plier (1) comprend un dispositif d'entrée (28) relié avec la commande (20) de la presse à plier (2), sous la forme d'un panneau de commande ou d'un clavier, dans lequel le dispositif d'entrée (28) est maintenu par le dispositif de support (10) et peut être déplacé conjointement avec le siège (3) en ce qui concerne le premier degré de liberté de mouvement et le deuxième degré de liberté de mouvement.
